# EUROPEAN PATENT APPLICATION

(11) **EP 1 323 393 A1**
(43) Date of publication of application: **02.07.2003**
(21) Application number: 01972589.4
(22) Date of filing: 28.09.2001
(51) Int. Cl.: A61C 7/08

(54) **MOUTHPIECE FOR ORTHODONTIC TREATMENT AND DEVICE FOR ORTHODONTIC TREATMENT USING THE MOUTHPIECE**

(30) Priority: 03.10.2000 JP 2000303814
(71) Applicant: Ito, Gakuji, Kagoshima-shi, Kagoshima 891-0175 (JP)
(72) Inventor: Ito, Gakuji, Kagoshima-shi, Kagoshima 891-0175 (JP)
(74) Representative: Gemmell, Peter Alan, Dr.
(86) International application number: JP0108548
(87) International publication number: WO02028308

(57) **Abstract**

In order to solve a drawback in a conventional fixed type orthodontic appliance and further to provide an orthodontic appliance with a high treatment effect and a novel orthodontic technique using the same, an orthodontic mouthpiece for conducting orthodontic treatment efficiently is constituted by connecting a plurality of segments including an upper anterior segment 10, a lower anterior segment 20, a right buccal segment 30 and a left buccal segment 40 to one another by orthodontic wire members 51a, 51b, 52a, 52b and 53 such that distances among the respective segments can be adjusted.

## Description

### TECHNICAL FIELD OF THE INVENTION

The present invention relates to an orthodontic technique, particularly to an orthodontic mouthpiece with which a long term application of an orthodontic appliance can be avoided, and to an orthodontic appliance which can reduce the orthodontic treatment period.

### BACKGROUND OF THE INVENTION

An orthodontic appliance which has currently been used most frequently in the world is a multi-bracket appliance (MB appliance) which is intended for the improvement of the malocclusion during the permanent dentition. The MB appliance was invented early in the 20^{th} century in the United States and it has been subjected to many improvements so far.

In such an MB appliance, a part called a bracket is attached to labial/buccal surface of all teeth in oral cavity. A metal arch wire is adjusted and placed to the attached brackets. A deflection of arch wire caused by the placement is continuously applied as a load to an alveolar bone supporting the teeth. The bone resorption occurs at a portion where the alveolar bone is pressed by the load and the bone formation occurs at a portion where the alveolar bone is pulled so that the alveolar bone is reconstructed. As a result, the teeth are moved.

In view of the above, by adjusting the arch wire periodically, teeth which belong to an anterior section or a buccal section are moved in a desired direction so that the teeth are correctively aligned and are properly occluded, thereby correcting the teeth in line with the arch form design at the time of the orthodontic treatment termination, which is set at the beginning of the treatment. The adjustment of the arch wire is ordinarily performed at the constant intervals of three or four weeks and the orthodontic treatment will be terminated in about two years.

As described above, in the orthodontic treatment using the MB appliance, it is generally necessary to keep the brackets bonded on the tooth surfaces and to attach the arch wire to the brackets for a long term of about two years till the treatment termination. For this reason, various inconveniences are caused in daily life of a patient.

For example, the MB appliance has a complicated shape comprising many brackets and arch wires. When the MB appliance with such a shape is placed into an oral cavity of a patient for an orthodontic treatment, a portion of the appliance comes in contact with the mucosa of the oral cavity and an uncomfortable feeling occurs at the lip or cheek. The patient may bear the uncomfortable feeling to some extent if it is limited in a short period. However, the uncomfortable feeling for the long period of about two years causes great distress to the patient.

The use of the MB appliance extends to a broad age group from junior high school students whose teeth have been changed from primary teeth to permanent teeth to adults in fifties or sixties. A burden due to the placement of the MB appliance in the oral cavity for a long period is large for a patient in any age group and it is important to solve such a problem early.

Also, since a portion of the MB appliance is always in contact with the mucosa of the oral cavity, the oral mucosa is injured and the injury deteriorates to reach an ulcer in some cases. When such a problem occurs in course of the orthodontic treatment, a case that the treatment itself must be stopped may occur in the worst case.

As mentioned above, since placement of the MB appliance is performed by bonding a bracket to the tooth surfaces and attaching an arch wire to the brackets, the application thereof is easily recognized by others when a patient receiving the orthodontic treatment opens the mouth. Since the brackets or the arch wires are attached to the tooth surfaces during the application of the MB appliance, fiber-rich foods easily tangle with them during a meal, and a tooth brushing becomes difficult. As a result, gingivitis occurs in some cases.

Also, since the arch wire of the MB appliance is adjusted periodically through a treatment period, a new load is applied to the teeth in each time of the adjustment. Therefore, the patient has a tooth pain and a root resorption in some cases.

Incidentally, when starting an orthodontic treatment, a patient is required to have a vision for continuing to go to hospital till the end of the treatment in spite of such an inconvenience as described above for about two years. In many cases, it is considerably difficult for busy modern people to continue to go to hospital. In view of the above, it is estimated that there are many potential patients who do not finally take action for the treatment and hesitate to the treatment even though they desire to take the orthodontic treatment.

Such a case appears in some cases that the orthodontics is grasped from an aesthetic point of view for simply wishing to correct the tooth alignment, so called cosmetic point of view. However, the malocclusion causes many troubles physiologically and pathologically. As the physiological troubles due to the malocclusion, for example, there are deterioration of a masticatory function, dysphonia, a jaw dysfunction, a trouble of growth and development of jaw bones and the like. As the pathological troubles, for example, there are plaque adhesion and gignivitis caused therefrom, an occlusal trama, injury of tooth and mucosa, an inducement to temporomandibular disorder and the like.

Of course, such an aesthetic problem as a distortion of the face and a mouth due to the malocclusion can never be ignored. There is a case that a patient gets to a socio-psychological trouble, that is, the difficulty to be adapted to the daily life style or the social environment due to the aesthetic problem. More specifically, a potential patient lives the daily life while leaving the malocclusion having a high possibility to cause a physiological, pathological and socio-psychological trouble as it is.

It is considered that, if the treatment period is reduced and the various problems due to the placement of the orthodontic appliance are solved, it is possible to start the orthodontic treatment without hesitation, and occurrence of various troubles due to the malocclusion can be prevented in advance.

An object of the present invention is to provide an orthodontic technique which does not require an all-time placement of an orthodontic appliance for a long time.

Another object of the present invention is to provide an orthodontic technique which can achieve reduction of an orthodontic treatment period.

The above and other objects and novel features of the present invention will become apparent from the description and the accompanying drawings of this specification.

### DISCLOSURE OF THE INVENTION

The present invention is a mouthpiece for orthodontics which is bit by upper and lower teeth, comprising: a plurality of orthodontic segments provided with an orthodontic guide portion which corresponds to respective ones of a plurality of partitioned regions of a dentition and guides a tooth to be corrected of the portion of dentition to a side of the mouthpiece to which the portion of dentition abuts; and distance adjusting means for adjusting a distance between the adjacent segments.

The orthodontic mouthpiece comprises a first stage orthodontic mouthpiece which is used for a period from a start of an orthodontic treatment to a leveling treatment stage of a dentition and a second stage orthodontic mouthpiece which is used for a period from termination of the leveling stage of the dentition to a treatment termination stage.

In the first stage orthodontic mouthpiece, the orthodontic guide portion is formed in a shape of a groove in which a dentition corrected at the termination of the leveling stage is accommodated. In the second stage orthodontic mouthpiece, the orthodontic guide portion is formed in a shape capable of coming in contact with tooth crowns constituting the dentition corrected at the stage of the treatment termination.

The segments include an upper anterior segment corresponding to upper anterior teeth, a lower anterior segment corresponding to a lower anterior teeth, and a left and a right buccal segments corresponding to left and right buccal teeth.

The segments include an upper anterior segment corresponding to upper anterior teeth, an upper left buccal segment corresponding to an upper left buccal teeth, and an upper right buccal segment corresponding to upper right buccal teeth. The segments include a lower anterior segment corresponding to a lower anterior teeth, a lower left buccal segment corresponding to a lower left buccal teeth, and a lower right buccal segment corresponding to a lower right buccal teeth.

The distance adjusting means is an orthodontic wire member which has an extendable/retractable loop in an intermediate portion thereof and whose end portions are connected to the segments to be adjusted.

The present invention comprises an orthodontic mouthpiece having either one of the constitutions described in the above, and wave stimulation supplying means which applies wave energy to a surrounding tissue of the placement portion of the orthodontic mouthpiece, contributing to the orthodontic tooth movement. The wave stimulation supplying means is an ultrasonic generating means.

The present invention constituted in the above manner provides a comfortable orthodontic appliance where a bracket or the like is not bonded to teeth, which is intended to promote reconstruction of an alveolar bone by applying wave stimulation such as ultrasonic waves, thereby reducing a treatment period by about 40% as compared with the case that the current MB appliance is used. By so doing, the drawback of the current MB appliance can considerably be solved.

In the orthodontic treatment, upper and lower dentitions are respectively partitioned to anterior teeth (including central incisors and lateral incisors on both sides) and buccal teeth (including from a canine to a second molar for each side) and treated as such. While aligning teeth for respective dentitions, the antero-posterior relationship as well as the vertical and the lateral positions of upper and lower dentitions are corrected to achieve the well-balanced dentitions to jaw bones.

In the present invention, in order to achieve the above function necessary to carry out such an orthodontic treatment effectively, a constitution of a segmented mouthpiece (SMP) has first been employed as a comfortable orthodontic appliance which is not bonded to teeth. That is, a constitution that four segments corresponding to upper and lower anterior teeth and left and right buccal teeth are coupled by distance adjusting means for adjusting the distances between the adjacent segments has been employed.

It is preferable that the mouthpiece is divided into four segments as described above, but it may be divided into five segments or more, or less than three segments, depending on a treatment situation. For example, in the case of a patient having a cleft of the upper lip, there occurs a case that the orthodontic treatment becomes easier by treating upper anterior teeth with segments separated into right and left without treating it with one segment.

As a case of the five segments, for example, it is assumed that, of the four segments corresponding to upper and lower anterior teeth and left and right buccal teeth, the segment corresponding to the upper anterior teeth is divided into left and right pieces as described above. As a case of the three segments, for example, a segment constitution including respective segments corresponding to upper anterior teeth and left and right buccal teeth is assumed.

Further, the orthodontic wire member serving as the distance adjusting means which couples the segments is adjusted according to the progress of the treatment. For example, the following adjustments are made, that is, 1) to correct the sideward position of the left and right buccal teeth, 2) to arrange the heights of the anterior teeth and the buccal teeth properly, or 3) to correct an antero-posterior positional difference, a vertical or lateral positional difference between the upper anterior teeth and the lower buccal teeth. For the adjustment, for example, it is considered that a loop is preliminarily provided in the orthodontic wire member as a simple constitution so that such a loop is expanded or closed properly. As the adjusting means for the orthodontic wire member, a constitution other than such a loop can, of course, be employed.

The orthodontic mouthpiece according to the present invention is, of course, different from the MB appliance, and it is also different from a Tooth Positioner (TP) which is an orthodontic appliance conventionally well known. The TP is a mouthpiece fabricated in the following manner. That is, a pair of set-up models with tight occlusion is made by finely adjusting the tooth position of dentition models taken at the time when an orthodontic treatment by the use of the MB appliance has almost been terminated, and then, fabricating the mouthpiece based on the set-up models. Furthermore, the TP is an appliance for stabilizing the dentition and the occlusion which have been subjected to orthodontic treatment, which must be placed in an oral cavity every night for about one year.

On the other hand, the orthodontic mouthpiece of the present invention has been devised as an orthodontic appliance substituted for the MB appliance. A fundamental difference between the MB appliance and the orthodontic mouthpiece lies in that a dentition is divided into the anterior section and the buccal section, teeth are aligned for each section by each segment, and mutual position of respective sections is corrected by adjusting the orthodontic wire member which couples the segments so that the upper and lower dentitions are tightly occluded in a well-balanced arch shape.

In the first stage of the orthodontic treatment, in order to roughly align the teeth along a dentition, a first stage orthodontic mouthpiece having a smooth groove-like guide portion for correction on an inner surface of the segment is used. In the second stage of the orthodontic treatment, in order to correct a position, skew and torsiversion of each tooth precisely, a second stage orthodontic mouthpiece having a guide portion for correction formed such that an inner surface of a segment comes in contact with a tooth crown is used.

Incidentally, in the case that a sufficient orthodontic treatment effect can be obtained by the use of only the first stage orthodontic mouthpiece, the treatment can be terminated only by the use of it. Further, in a case of a very light condition, only the second stage orthodontic mouthpiece may be used from the beginning.

The orthodontic mouthpiece of the present invention having the above constitution can develop an orthodontic treatment effect even by only the placement of the mouthpiece. For example, a treatment can be performed by dividing the period from a treatment start to a treatment termination into a plurality of stages in accordance with the progress of the treatment and properly using an orthodontic mouthpiece having a constitution corresponding to each treatment stage.

The way to set the treatment stages can be determined depending on an individual patient, and the segment adjustment may be performed case by case. Alternatively, it is also possible to set the several treatment stages in advance for a typical case and use the ready-made orthodontic mouthpieces having a constitution in accordance with the case by properly selecting the mouthpieces.

Further, in the orthodontics, there is not only a case of placing the orthodontic appliance but also a case that correction is made by curing a daily tongue or lip habit such as a tongue thrusting habit of protruding a tongue between upper and lower teeth unconsciously at a time of swallowing, or a lip biting habit of biting a lower lip. This is a treatment method adapted to a person who is an age of a junior high school student or below and a case that the placement of the orthodontic appliance is unnecessary. In the case of the temporomandibular disorder, the occlusal correction of molar teeth is sometimes made by giving guidance to conduct mastication correctly. Thus, a therapy such as a so-called myofunctional therapy (MFT) to a swallowing function, a mastication function, a tongue or lip habit or the like can be used together with the orthodontic mouthpiece according to the present invention.

Especially, there is a problem that the MFT for curing a tongue and/or a lip habit largely depends on the willpower of a patient and it requires a considerable tolerance, and thus, it is hard to continue the therapy. However, by using the MFT together with the orthodontic mouthpiece of the present invention, a sense of purpose to the occlusal correction is embodied as compared with a case that the appliance or the like is not used, and the orthodontic effect is actually securely recognized owing to the placement of the orthodontic mouthpiece of the present invention. Therefore, a synergistic effect can be obtained even in the implementation of the MFT and thus the patient can continue the therapy without getting tired.

Furthermore, when wave stimulation supplying means such as an ultrasonic generating device is used together with the orthodontic mouthpiece having the above constitution during the placement of the same, it is possible to obtain the sufficient orthodontic treatment effect in a shorter placement time with a smaller load as compared with the conventional MB appliance. This is because, even when a large weight object is moved, it is possible to move the object with a significantly smaller force by applying a force at constant intervals as compared with the case that the object is continuously pushed with a constant force, and such a fact is true of the tooth movement in the orthodontic treatment.

In view of the above, a large reduction of an orthodontic treatment period can be made possible by applying ultrasonic stimulation to a tooth surrounding tissue in a state that the orthodontic mouthpiece has been placed to a patient in order to apply the periodic stimulation to an alveolar bone so as to efficiently move the tooth, while using the synergistic effect with the activation of a living tissue. It is sufficient to irradiate the ultrasonic waves to each dentition from the outside of the mouth for 20 minutes per day in a state that the orthodontic mouthpiece has been placed to a patient.

In the treatment using such an ultrasonic wave, it is possible to use a remarkably smaller load as compared with the conventional orthodontic treatment. Therefore, it is expected to not only move a tooth efficiently but also alleviate side effects such as tooth pain and root resorption.

As the wave stimulation, ultrasonic wave may be used, but stimulation with a sonic wave other than the ultrasonic wave, an electromagnetic field vibration, a mechanical vibration and the like are also available. As the mechanical vibration supplying means, a vibrator can be used in a simple case, but vibration stimulation can be supplied by means such as swinging, grasping or the like. As a further simple method of supplying the wave stimulation, making voice, for example, reading aloud, singing a song or the like may be used, and further chewing gum may be used.

In the conventional MB appliance, a tooth is moved by the reconstruction of an alveolar bone caused by adjusting the arch wire to be attached to the brackets to apply a continuous load to the alveolar bone. However, since a curing appliance is always fixed in an oral cavity, mental and physical burden of a patient is large in daily life. Also, a long term of about two years is required for the treatment.

On the contrary, in the novel treatment invented by the inventor of the present invention, a smooth groove provided in an inner surface of a segment of the first stage orthodontic mouthpiece guides a malaligned tooth protruding from a dentition into the dentition in a first stage of the orthodontic treatment. Further, in the second stage of the orthodontic treatment, the second stage orthodontic mouthpiece manufactured so as to match with a predicted set-up model where an ideal dentition to be a goal of the treatment has been designed is used to precisely correct the position, skew or torsiversion of each tooth so that upper and lower teeth can be occluded tightly.

In addition, the following effects can be obtained by applying, for example, ultrasonic wave stimulation as the wave stimulation to the surrounding tissue in a state that the orthodontic mouthpiece has been placed in an oral cavity. That is, by applying the intermittent wave stimulations to the alveolar bone, a tooth is moved efficiently, activity of a tissue surrounding a dentition is enhanced, and the reconstruction of an alveolar bone is promoted.

As the synergistic effect of the effects described above, the tooth is moved efficiently with a small load and side effects such as pain of a surrounding tissue and root resorption due to the orthodontic treatment is reduced. About 40% reduction of the treatment period in comparison to the conventional treatment can be achieved. More specifically, it is reduced to about 15 months. Also, since the orthodontic mouthpiece is an attachable/detachable removable orthodontic appliance, it is unnecessary to always place the brackets and the arch wires in an oral cavity and thus a patient will not become nervous about others' eyes even during the going-out.

The present invention has devised an orthodontic mouthpiece having the above constitution and a novel orthodontic method by using the orthodontic appliance using the same. Such an orthodontic treatment is different from the conventional orthodontic appliance which applies a continuous load to a dentition to move a tooth physically, for example, the MB appliance, and it is a treatment which promotes the tooth movement by applying the wave stimulation to a portion around a dentition intermittently.

### BRIEF DESCRIPTION OF THE DRAWINGS

FIGs. 1 are diagrams showing a first stage orthodontic mouthpiece which is an embodiment of the present invention, FIG. 1A being a perspective view and FIG. 1B being a sectional view showing the mouthpiece taken along the line A-A of FIG. 1A.
FIGs. 2 are explanatory diagrams showing an orthodontic guide portion of the first orthodontic mouthpiece, FIG. 2A being a plan view and FIG. 2B being an explanatory diagram seen in the direction of the arrow shown in FIG. 1A.
FIGs. 3 are views showing a second stage orthodontic mouthpiece, FIG. 3A being a perspective view, FIG. 3B being a sectional view showing a situation of the mouthpiece taken along the line A-A in FIG. 3A, and FIG. 3C being a sectional explanatory diagram showing a situation where upper and lower anterior teeth have been accommodated in the mouthpiece shown in FIG. 3B.
FIGs. 4 are explanatory diagrams showing a situation of an orthodontic guide portion of the second stage orthodontic mouthpiece, FIG. 4A being a plan view seen from above and FIG. 4B being an explanatory diagram seen in the direction of the arrow shown in FIG. 4A.
FIGs. 5 are views showing an orthodontic mouthpiece, FIG. 5A being a perspective view of the orthodontic mouthpiece corresponding to only an upper dentition and FIG. 5B being a perspective view of the orthodontic mouthpiece corresponding to only a lower dentition.
FIGs. 6A is an explanatory diagram showing a situation of an implementation of orthodontic treatment using the orthodontic mouthpiece of the present invention, and FIG. 6B is a sectional explanatory diagram of a partially enlarged ultrasonic wave irradiating portion shown in FIG. 6A.

### BEST MODE FOR CARRYING OUT THE INVENTION

Embodiments of the present invention will be explained below in detail with reference to the drawings.

### (First Embodiment)

In the first embodiment, an orthodontic mouthpiece of the present invention will be explained.

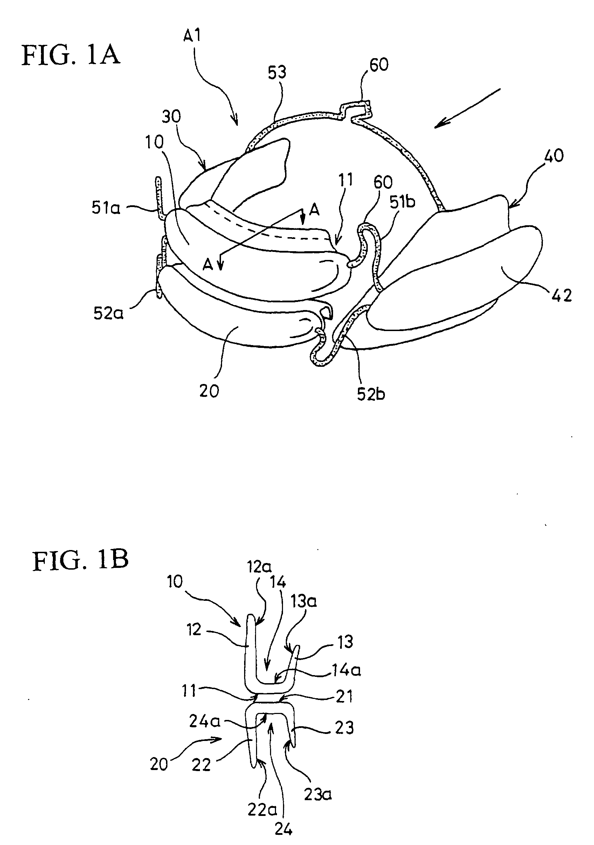

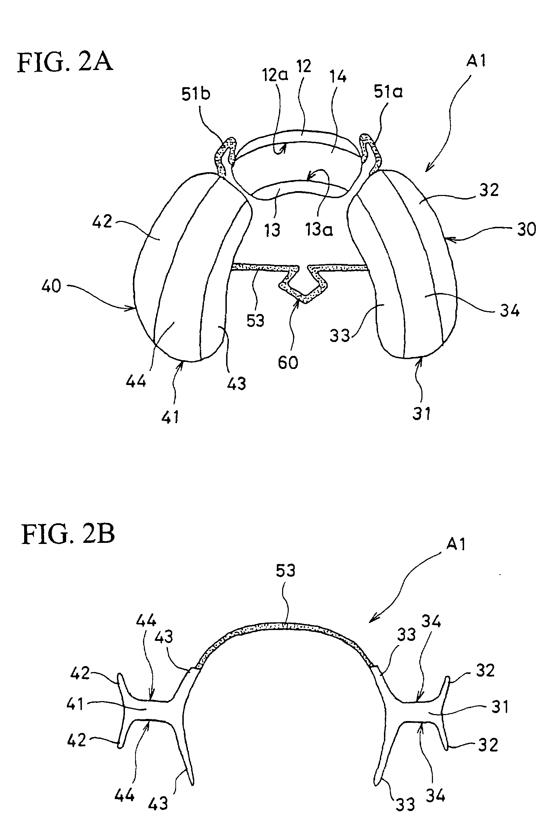

FIG. 1A is a perspective view showing a first stage orthodontic mouthpiece and FIG. 1B is a sectional view showing the mouthpiece taken along the line A-A in FIG. 1A. FIG. 2A is an explanatory diagram showing an aspect of an upper anterior segment and left and right buccal segments of the first stage orthodontic mouthpiece which have been viewed downwardly from above and FIG. 2B is an explanatory diagram showing an aspect of the left and right buccal segments and an orthodontic wire member which has been viewed in the direction of the arrow shown in FIG. 1A.

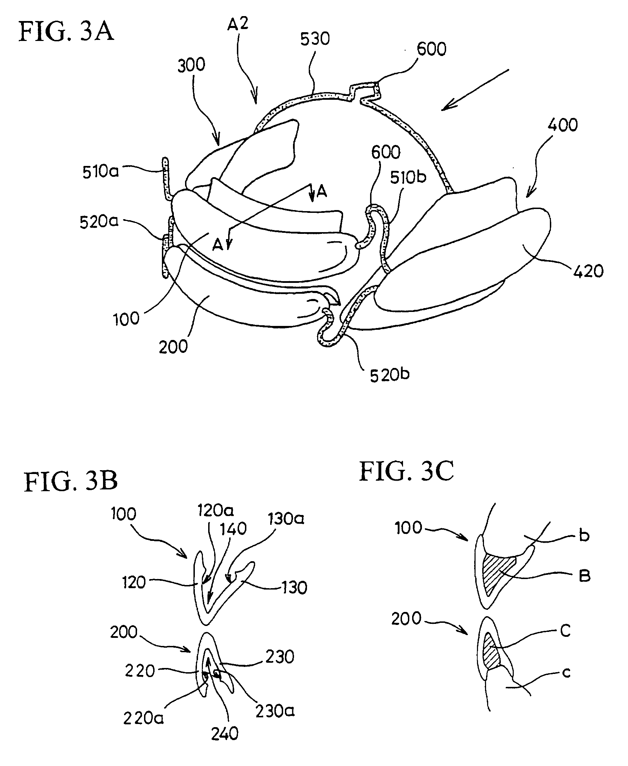

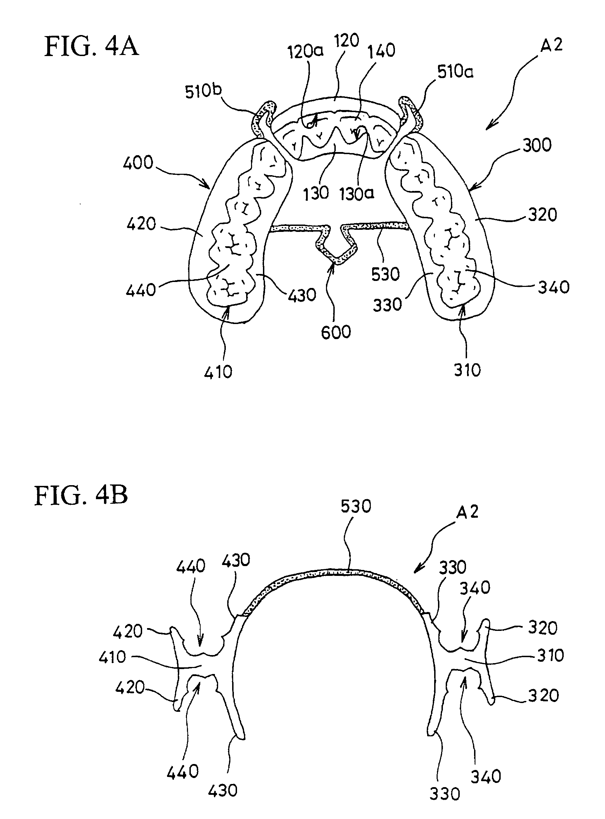

FIG. 3A is a perspective view showing a second stage orthodontic mouthpiece, FIG. 3B is a sectional view showing an aspect of the second stage orthodontic mouthpiece taken along the cutting line A-A shown in FIG. 3A, and FIG. 3C is a sectional view showing a situation where upper and lower anterior teeth have been accommodated in upper and lower anterior segments. FIG. 4A is an explanatory diagram showing an aspect of an upper anterior segment and left and right buccal segments of the second stage orthodontic mouthpiece shown in FIG. 3A viewed downwardly from above, and FIG. 4B is an explanatory diagram showing an aspect of the left and right buccal segments and an orthodontic wire member which have been viewed in the direction of the arrow shown in FIG. 3A.

The orthodontic mouthpiece explained in this embodiment comprises a first stage orthodontic mouthpiece A1 shown in FIGs. 1 and a second stage orthodontic mouthpiece A2 shown in FIGS. 3.

As shown in FIGS. 1, the first stage orthodontic mouthpiece A1 comprises an upper anterior segment 10, a lower anterior segment 20, a right buccal segment 30 and a left buccal segment 40. Regarding the terms "left" and "right" of the segment, a side positioned on the right side of a patient is defined as a right side and a side positioned on the left side of the patient is defined as a left side in a situation where the mouthpiece has been placed to the patient.

Each segment is manufactured from a high elastic silicone rubber, and the anterior segments and the buccal segments can be formed to cover anterior teeth and buccal teeth so that teeth of respective sections are guided and aligned by inner surfaces of the orthodontic guide portions formed in a groove shape. By manufacturing the segment from the silicone rubber, an inner surface of the segment can be made smooth and the segment can be brought in soft contact with the alveolar mucosa of an oral cavity. As the silicone rubber, one commercially available can be used.

As shown in FIG. 1A, the anterior segment 10 is formed in an approximately arch shape so as to match with an approximately arch-shaped dentition of the anterior section and a lower portion 11 thereof is formed in a flat shape as shown in FIG. 1B. A front edge portion and a rear edge portion of the segment are respectively provided with a front bank portion 12 and a rear bank portion 13, and an orthodontic guide portion 14 formed in a groove is positioned between the front bank portion 12 and the rear bank portion 13. An upper anterior section is to fit into the orthodontic guide portion 14.

The front bank portion 12 is formed such that it is slightly higher than the rear bank portion 13 so as to coincide with surface heights of anterior teeth and so that surfaces of the upper anterior teeth can abut to a front bank portion inner surface 12a in a bitten state. The front bank portion inner surface 12a, a rear bank portion inner surface 13a and an orthodontic guide portion inner surface 14a are formed in smooth inner surfaces such that teeth abutting thereto smoothly slide.

As shown in FIG. 1A, the lower anterior segment 20 is formed in an approximately arch shape so as to match with an approximately arch-shaped dentition of the lower anterior teeth and an upper surface portion 21 thereof is formed in a flat shape as shown in FIG. 1B. A front edge portion and a rear edge portion of the segment are respectively provided with a front bank portion 22 and a rear bank portion 23, and an orthodontic guide portion 24 formed in a groove is positioned between the front bank portion 22 and the rear bank portion 23. A lower anterior section is to fit into the orthodontic guide portion 24.

The front bank portion 22 is formed such that it is slightly higher than the rear bank portion 23 so as to coincide with surface heights of lower anterior teeth and so that surfaces of lower anterior teeth can abut to a front bank portion inner surface 22a in a bitten state. The front bank portion inner surface 22a, a rear bank portion inner surface 23a and an orthodontic guide portion inner surface 24a are formed in smooth inner surfaces such that teeth abutting thereto smoothly slide.

On the other hand, as shown in FIGs. 2, the left and right buccal segments 30 and 40 are provided with biting portions 31 and 41 interposed between bitten upper and lower buccal teeth. The biting portions 31 and 41 are respectively provided with front bank portions 32 and 42 and rear bank portions 33 and 43, and portions between the front bank portions 32 and 42 and the rear bank portions 33 and 43 are respectively formed in groove-shaped orthodontic guide portions 34 and 44. Both upper and lower buccal sections enter into the orthodontic guide portions 34 and 44 in a state that upper and lower buccal teeth have occluded.

End portions of the left and right buccal segments 30 and 40 positioned on anterior teeth sides thereof having the above constitution are coupled to sides of the upper and lower anterior segments 10 and 20 by elastic orthodontic wire members 51a, 51b, 52a and 52b that are distance adjusting means between respective segments as shown in FIG. 1A. Further, almost central portions of the left and right buccal segments 30 and 40 are coupled to each other by an elastic orthodontic wire member 53. When the orthodontic wire member 53 is formed in an almost arch shape, for example, along the palate surface, the orthodontic wire member 53 does not block the movement of a tongue even in a state that the mouthpiece has been placed in the oral cavity.

Each of the orthodontic wire members 51a, 51b, 52a, 52b and 53 is formed with a loop portion 60 formed by bending the orthodontic wire member to be in a flat shape so as to extend along the palate surface at a time of placement of the mouthpiece, and both ends thereof are coupled to the respective segments. An extension length of each orthodontic wire member 51a, 51b, 52a, 52b and 53 is adjusted by widening or reducing the loop portion 60 by the use of orthodontic pliers to adjust such a loop portion 60. As a result, a distance between the left and right buccal segments 30 and 40, or between the left and right buccal segments 30 and 40 and the upper and lower anterior segments 10 and 20 can freely be adjusted in a three-dimensional direction.

The first stage orthodontic mouthpiece A1 having the above constitution is fabricated based on the several kinds of dentition models different in size and selected from persons having a normal occlusion. Duplicated gypsum models are manufactured from the based dentition models. A set of upper and lower gypsum models of the duplicated gypsum models are attached to an articulator in the same manner as that performed when a denture is manufactured, and then an opposition relationship between upper and lower dentitions in an oral cavity is reproduced. Shapes of an anterior segment, buccal segments and orthodontic wire members connecting these segments are designed on the basis of the reproduction. Orthodontic wire members are first bent and manufactured in line with the design and ends thereof are embedded into respective segments, thereby completing the fabrication of the segments. The segment can be manufactured by stacking a material on a gypsum model or softening and pressing the material to the model depending on the material to be used.

The first stage orthodontic mouthpiece A1 constructed in the above manner is used in a first stage of the treatment from an orthodontic treatment start to a leveling stage termination of a dentition. When a patient bites such a first stage orthodontic mouthpiece A1 by upper and lower teeth so that dentitions are inserted into the groove-like orthodontic guide groove portions 14, 24, 34 and 44 of the respective segments and are covered therewith, teeth protruding from the dentitions and positioned at abnormal positions are suppressed by smooth inner surfaces of the respective segments. By repeating this treatment daily, teeth subjected to orthodontics are gradually moved along the directions of the grooves and the dentitions are roughly aligned over a period from three months to six months.

Several kinds of the first stage orthodontic mouthpieces A1 may be prepared in accordance with the sizes of the anterior section. Since the situation of the dentition before the treatment can generally be classified into several types on the basis of the shape of a jaw and the tooth size, first stage orthodontic mouthpieces A1 corresponding to such types can be prepared in advance. Further, since the size of the buccal section varies depending on whether or not premolars are extracted at a time of an orthodontic treatment, adjustment may be made by cutting the lengths of the left and right buccal segments 30 and 40 properly in accordance with respective cases.

Such a first stage orthodontic mouthpiece A1 can easily be placed by merely biting the mouthpiece whose distances between respective segments have been preliminarily adjusted by the distance adjusting means in accordance with respective stages of the orthodontic treatment. Since a fastening portion or the like is not provided in the mouthpiece, the mouthpiece can easily be detached.

In FIG. 3A, an appearance of the second stage orthodontic mouthpiece A2 is shown in a perspective view. The mouthpiece A2 has a constitution generally similar to that of the first stage orthodontic mouthpiece A1 externally. That is, the second stage orthodontic mouthpiece A2 comprises an upper anterior segment 100, a lower anterior segment 200, a right buccal segment 300 and a left buccal segment 400.

Each segment is manufactured from a high elastic silicone rubber, and the anterior segments and the buccal segments can be formed to cover anterior teeth and buccal teeth so that teeth of respective sections are guided and aligned by inner surfaces of the orthodontic guide portions formed in a groove shape. By manufacturing the segment from the silicone rubber, a surface of the segment can be made smooth and the segment can be brought in soft contact with the alveolar mucosa of an oral cavity. As the silicone rubber, one commercially available can be used.

The upper anterior segment 100, the lower anterior segment 200, and the left and right buccal segments 300 and 400 are coupled to each other by orthodontic wire members 510a, 510b, 520a, 520b and 530 serving as distance adjusting means between respective segments through loop portions 600 which can be stretched/retracted by the use of orthodontic pliers and which are interposed in middle portions of the orthodontic wire members.

As shown in FIG. 3A and FIG. 4A, respectively, the upper anterior segment 100 is formed in an approximately arch shape so as to match with an arch-shaped dentition of anterior teeth. A front edge portion and a rear edge portion of the segment 100 are respectively provided with a front bank portion 120 and a rear bank portion 130. As shown in FIG. 3B, an orthodontic guide portion 140 formed in such a groove shape that it comes in contact with tooth crowns constituting a dentition corrected in a final stage of the treatment is formed between the front bank portion 120 and the rear bank portion 130. A front bank portion inner surface 120a and a rear bank portion inner surface 130a are formed in smooth surfaces such that teeth abutting thereto smoothly slide. Upper anterior teeth enter in the orthodontic guide portion 140 so that crowns of the upper anterior teeth abut to an inner surface of the guide portion. An aspect where a crown of an upper anterior tooth has been accommodated in the orthodontic guide portion 140 is shown in FIG. 3C. In the figure, "B" denotes an upper anterior tooth and "b" denotes the gum thereof.

As shown in FIG. 3A and FIG. 4A, respectively, the lower anterior segment 200 is also formed in an approximately arch shape so as to match with a generally arch-shaped dentition of the anterior teeth. A front edge portion and a rear edge portion of the segment 200 are respectively provided with a front bank portion 220 and a rear bank portion 230, and an orthodontic guide portion 240 formed in such a groove shape that it comes in contact with tooth crowns constituting a dentition corrected at a treatment termination stage is formed between the front bank portion 220 and the rear bank portion 230 as shown in FIG. 3B. A front bank portion inner surface 220a and a rear bank portion inner surface 230a are formed in smooth surfaces such that teeth abutting thereto smoothly slide.

Lower anterior teeth enter in the orthodontic guide portion 240 so that crowns of lower anterior teeth abut to an inner surface thereof. An aspect where a crown of a lower anterior tooth has been accommodated in the orthodontic guide portion 240 is shown in FIG. 3C. In the figure, "C" denotes a lower anterior tooth and "c" denotes the gum thereof.

On the other hand, as shown in FIG. 4B, the left and right buccal segments 300 and 400 are respectively provided with biting portions 310 and 410, which are respectively interposed between upper and lower buccal teeth of the right buccal portions and left buccal portions in a state that upper and lower buccal teeth have occluded. The biting portions 310 and 410 are respectively provided with front bank portions 320 and 420 and rear bank portions 330 and 430, and orthodontic guide portions 340 and 440 formed in the shape of the crowns of buccal teeth are respectively formed between the front bank portions 320 and 420 and the rear bank portions 330 and 430. In the state that the upper and lower teeth have occluded, upper and lower left and right buccal teeth enter in the orthodontic guide portions 340 and 440.

The second stage orthodontic mouthpiece A2 is used at a second stage of the orthodontic treatment, and the dentition has been corrected to a certain extent by the first stage orthodontic mouthpiece A1 at this stage. In the second stage, precise movement of teeth is required so as to be in a shape closer to a design of the orthodontic treatment termination.

For this reason, the orthodontic guide portions 140, 240, 340 and 440 of the second stage orthodontic mouthpiece A2 are molded by transferring a dentition shape of a final aspect at a time of the orthodontic treatment termination from the dentition roughly aligned by the first stage orthodontic mouthpiece A1, i.e., from a predicted set-up model prepared by designing a dentition at the time of the orthodontic treatment termination based on the dental model after the leveling treatment termination.

The predicted set-up model is manufactured by analyzing a shape of a jaw of a denture base or size of teeth from a dentition model at a time of the orthodontic treatment start, examining a desirable dentition and a desirable occlusion at a time of the orthodontic treatment termination on the basis of the analysis and correcting the arrangement of teeth on the dentition model. Recently, a computer-based stimulation program has been developed.

As such a simulation program, a ready-made software such as, for example, Casper commercially available from Unison Inc. can be used. Three-dimensional information of a dentition model before an orthodontic treatment is inputted into a computer by using laser beam and a predicted dentition model after an orthodontic treatment termination is produced on a screen of the computer on the basis of the inputted data and it is outputted as a die. By using the die, a precise second stage orthodontic mouthpiece to be a treatment goal can be manufactured.

That is, the second stage orthodontic mouthpiece A2 is manufactured on the basis of a predicted set-up model of a patient, as described above. A duplicated gypsum model is prepared from the based dentition model. A pair of the upper and lower gypsum models are attached to an articulator in accordance with procedure used when a denture is manufactured so that an opposition relationship between upper and lower dentitions in an oral cavity is reproduced. Further, shapes of anterior segments and buccal segments and orthodontic wire members connecting these segments are designed on the basis of the reproduction. The orthodontic wire members are first bent and fabricated in line with the design and ends thereof are embedded into the respective segments, thereby completing the fabrication of the segments. The segment can be manufactured by stacking a silicone rubber material on a gypsum model or softening or pressing the material to the model depending on the material to be used.

Since inner surfaces of the respective segments of the second stage orthodontic mouthpiece A2 correspond to the shapes of tooth crowns constituting dentitions at a time of the orthodontic treatment termination, the crowns of all the teeth can be firmly held by the mouthpiece. Therefore, positions, skews and torsiversions of the teeth can be precisely corrected so that upper and lower teeth can occlude tightly. The period to use the second stage orthodontic mouthpiece having such a constitution is considered to be from 6 months to 12 months.

Such a second stage orthodontic mouthpiece A2 is adjusted by adjusting distances among respective segments by the distance adjusting means in accordance with the progress of an orthodontic treatment in advance, so that a patient can easily place it in the mouth by merely biting at home. Since a fastening portion or the like is not provided, the mouthpiece can easily be detached.

### (Second Embodiment)

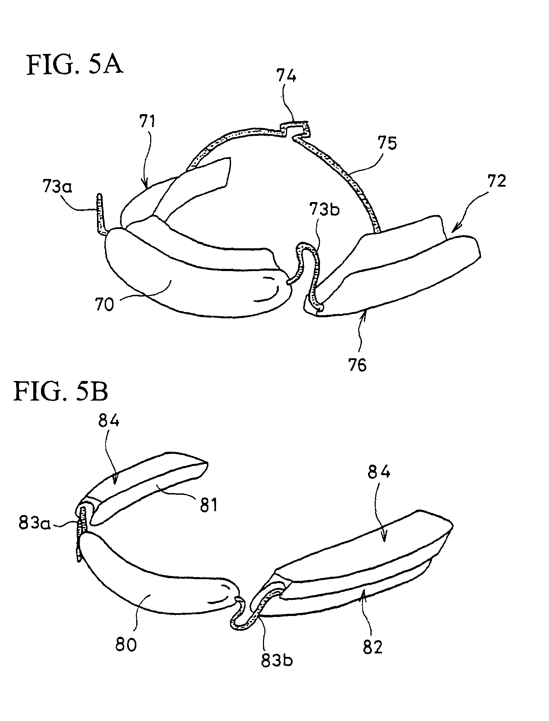

In an orthodontic mouthpiece of the present embodiment, as shown in FIG. 5A, an upper anterior segment 70, an upper right buccal segment 71 and an upper left buccal segment 72 are connected to one another such that distances among them can be adjusted by orthodontic wire members 73a and 73b. Further, the left and right buccal segments 71 and 72 are also connected to each other by an orthodontic wire member 75 provided at its intermediate portion with a loop portion 74.

The upper anterior segment 70 can be constituted in a similar manner to the upper anterior segments 10 and 100 explained in the first embodiment. That is, the upper anterior segment 70 may be constituted to be similar to the upper anterior segment 10 of the first stage orthodontic mouthpiece A1 whose orthodontic guide portion has been formed in the groove shape, alternatively, to be similar to the upper anterior segment 100 of the second stage orthodontic mouthpiece A2 formed so as to meet with crown shapes of teeth constituting a dentition at a time of an orthodontic treatment termination. Further, left and right buccal segments 71 and 72 are not formed with biting portions for a lower dentition and a segment bottom face 76 is formed to be flat.

In a case shown in FIG. 5B, a lower anterior segment 80, a lower right buccal segment 81 and a lower left buccal segment 82 are connected to one another such that distances among them can be adjusted by orthodontic wire members 83a and 83b. The lower anterior segment 80 may be constituted in a similar manner to the lower anterior segments 20 and 200 explained in the first embodiment. That is, the lower anterior segment 80 may be constituted to be similar to the lower anterior segment 20 of the first stage orthodontic mouthpiece A1 whose orthodontic guide portion has been formed in the groove shape, alternatively, to be similar to the lower anterior segment 200 of the second stage orthodontic mouthpiece A2 formed so as to meet with crown shapes of teeth constituting a dentition at a time of an orthodontic treatment termination. Further, left and right buccal segments 81 and 82 are not formed with biting portions for left and right upper dentitions and a segment upper face 84 is formed to be flat.

The orthodontic mouthpieces having the constitutions shown in FIGs. 5A and 5B comprise three segments, respectively, and it is used, for example, when either one dentition of upper and lower dentitions is fixed because of a denture or the like and only the other dentition is to be the teeth to be subjected to orthodontics. As shown in the first embodiment, the orthodontic treatment which adjusts the upper anterior and upper left and right buccal segments or the lower anterior and upper left and right buccal segments is more preferable.

### (Third Embodiment)

In this embodiment, an orthodontic appliance using the orthodontic mouthpiece explained in the first embodiment and an orthodontic treatment using the orthodontic appliance of the present invention will be explained in detail.

The orthodontic appliance of the present invention comprises the orthodontic mouthpiece explained in the first embodiment and wave stimulation supplying means which applies wave energy for promoting a tooth movement to a portion to be subjected to orthodontics which has been placed with the orthodontic mouthpiece and a surrounding tissue around the portion.

As such a wave stimulation supplying means, means which can supply extremely small wave energy with a magnitude generally equivalent to pulsation of a human may be used, and means for supplying wave stimulation such as ultrasonic waves is preferable. For example, an ultrasonic wave device for curing bone fracture which has been developed by US Exogen Inc. can be used effectively as the ultrasonic wave stimulating device. An ultrasonic wave device for curing bone fracture which is being sold as SAFHS (registered trademark) by TEIJIN LTD. can be utilized in Japan.

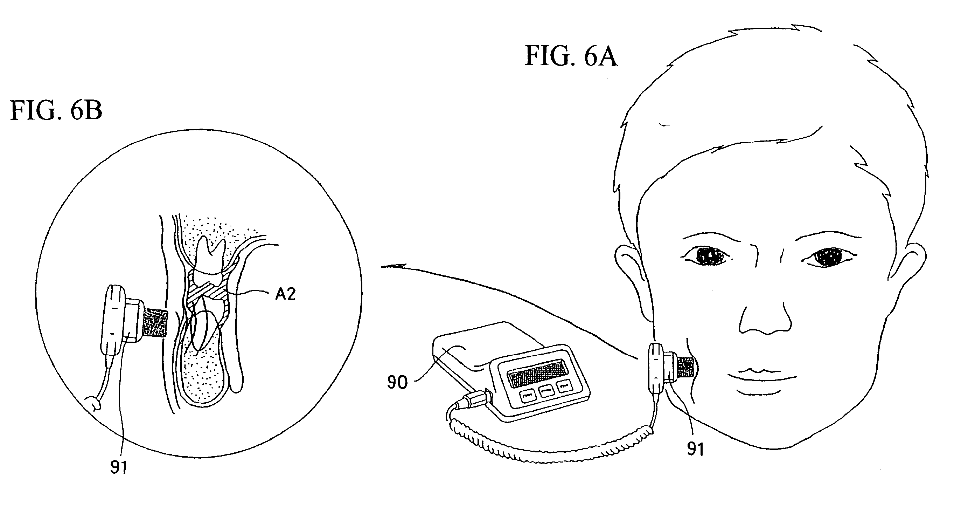

This device is constituted such that it can irradiate ultrasonic wave of a frequency of 1.5 MHz with a burst width of 200 µsec. at cycle period of 1.0 kHz under the control of a microcomputer. SAFHS comprises a main body 90 which performs control of ultrasonic wave to be generated and an ultrasonic wave supplying head 91 which is attachably/detachably connected to the main body 90 as shown in a treatment situation in FIG. 6, and ultrasonic wave irradiation can easily be conducted by putting the ultrasonic wave supplying head 91 on a portion to be irradiated on which jelly for ultrasonic wave has been applied. Since SAFHS is constituted in a portable small size, it can be used at home through rental.

The current MB appliance transmit a deflection of an arch wire whose deflection has been adjusted to alveolar bone as a continuous load to cause reconstruction of a bone tissue, thereby moving a tooth. Though the orthodontic mouthpiece of the present invention is also similar to the current MB appliance in that a continuous load is applied to an alveolar bone by segments made of high elastic silicone rubber, the present invention has created a novel treatment where, even if a placement time per day is short, reconstruction of an alveolar bone can be promoted by applying wave stimulation to the alveolar bone intermittently by using the ultrasonic wave stimulating device.

A novel orthodontic treatment according to the orthodontic appliance of the present invention using both the ultrasonic wave stimulating device having such a constitution and the orthodontic mouthpiece explained in the first embodiment will be explained below.

Prior to the start of an orthodontic treatment, a first stage orthodontic mouthpiece suitable to a patient is selected from several kinds of first stage orthodontic mouthpieces. In the selection, a first stage orthodontic mouthpiece in accordance with a jaw shape, an occlusion of upper and lower teeth of a patient or the like is selected so that the mouthpiece fits the orthodontic treatment plan.

Orthodontic wire members of the selected first stage orthodontic mouthpiece are adjusted to fit to the oral cavity of a patient and thus respective distances among the upper anterior segment 10, the lower anterior segment 20, and the left and right buccal segments 30 and 40 are adjusted. After the adjustment, the first stage orthodontic mouthpiece is placed to the patient. Jelly for ultrasonic wave is applied to outer skins of the portions corresponding to the gingiva of the anterior teeth portions and left and right buccal teeth portions, and a tip end of the ultrasonic wave stimulation supplying head 91 connected to the ultrasonic wave stimulating device 90 is put on these portions to irradiate ultrasonic wave to the respective portions, for example, for 20 minutes to each portion.

One treatment is terminated in this manner. It is necessary to make the patient place the first stage orthodontic mouthpiece into the oral cavity and conduct ultrasonic wave irradiation during the placement every night at home till the next visit to the clinic. It is preferable that placement of the orthodontic mouthpiece is conducted in a selected convenient time for at least about one hour in a day. The placement may be conducted in a sleep time.

Since the orthodontic mouthpiece of the present invention can easily be detached and the placement time can significantly be reduced as compared with the conventional MB appliance, for example, a patient can place the mouthpiece while watching TV. As a result, it is possible for the patient to continue the home treatment without bothering about the time. Though a patient may place the first stage orthodontic mouthpiece A1 a plurality of times per day, it is unnecessary to use the ultrasonic wave stimulating device together for each time.

When placement of the orthodontic mouthpiece and ultrasonic wave irradiation are continued at home in this manner, a dentition is guided by the groove of the first stage orthodontic mouthpiece A1 and a tooth to be subjected to orthodontics is gradually moved. At the next visit to the clinic, the progress of the orthodontic treatment is confirmed and the orthodontic wire members as the distance adjusting means are adjusted and the home treatment of the placement of the orthodontic mouthpiece and the ultrasonic wave irradiation is continued again. By conducting such a treatment for about 6 months, a leveling stage of the dentition is terminated.

When the leveling stage of the dentition is terminated, a predicted set-up model at a time of the orthodontic treatment termination is fabricated based on the dentition model at this time, and a second stage orthodontic mouthpiece in which a final dentition arch shape at the time of the orthodontic treatment termination is transferred is fabricated based on the set-up dentition model. The orthodontic wire members of the second stage orthodontic mouthpiece A2 are adjusted, and the mouthpiece is placed to the oral cavity of the patient, and simultaneously, ultrasonic wave is irradiated to the portions corresponding to the gingiva of the anterior teeth portion and the left and right buccal teeth portions from the outside of the mouth. The orthodontic treatment is continued at home in the same manner as that of the first stage orthodontic mouthpiece A1 till the next visit to the clinic. The placement time of the second stage orthodontic mouthpiece A2 may be set in the same manner as that of the first stage orthodontic mouthpiece A1 and the ultrasonic wave irradiation can be conducted similarly.

At each visit to the clinic, the progress of the orthodontic treatment is confirmed and the orthodontic wire members of the secont stage orthodontic mouthpiece A2 are adjusted to continue the orthodontic treatment. Since the inner surface of the segment of the second stage orthodontic mouthpiece A2 is formed in the shapes of individual tooth crowns corresponding to those of the dentition at the time of orthodontic treatment termination, the orthodontic treatment will securely progress so as to fit to the dentition design at the time of the orthodontic treatment termination by the use of such a second stage orthodontic mouthpiece A2.

The orthodontic treatment with the above-described constitution which the present inventor has created is an excellent orthodontic treatment which can be conducted with such an extremely short term that can not be predicted from the conventional art and can reduce a patient's burden remarkably.

Incidentally, in the above explanation, the orthodontic treatment using both the ultrasonic wave stimulating device and the orthodontic mouthpiece described in the first embodiment has been explained, but even though the orthodontic mouthpiece of the present invention is used alone without using such a wave stimulation supplying means as the ultrasonic wave stimulating device together, an orthodontic treatment effect can be obtained.

For example, an orthodontic treatment can be conducted by dividing the period from a treatment start to a treatment termination into a plurality of treatment stages in accordance with the progress of the treatment and properly using orthodontic mouthpieces constituted so as to meet with the respective treatment stages. The way to set respective treatment stages may be determined depending on the individual patients.

With respect to the orthodontic mouthpieces used in the above treatment, the setting of the shape of the orthodontic guide portion ranges from the groove shape like that of the orthodontic guide portion of the first stage orthodontic mouthpiece A1 explained in the first embodiment to the groove shape which matches with the tooth crowns constituting the corrected dentition assumed to be at the termination of the treatment like that of the orthodontic guide portion of the second stage orthodontic mouthpiece A2. The shape of the orthodontic guide portion may be set in accordance with the predicted set-up model by accurately grasping an orthodontic situation in each stage.

Alternatively, instead of manufacturing the orthodontic mouthpieces so as to fit to the respective treatment stages, a simpler treatment method using orthodontic mouthpieces including a so-called semi-order-made method is available in which several treatment stages are set in advance, ready-made orthodontic mouthpieces in accordance with the stages are formed and one is selected therefrom and used properly.

Further, a therapy so-called a MET for curing a daily tongue or lip habit such as a tongue thrusting habit of protruding a tongue between upper and lower teeth unconsciously at a time of swallowing or a lip biting habit of biting a lower lip can be used together with the orthodontic mouthpiece of the present invention.

The present invention is not limited to the above-described embodiments, but it may be modified variously without departing from the spirit and scope of the invention.

For example, in the above explanation, the case that the orthodontic treatment is largely divided into two stages and two kinds of orthodontic mouthpieces in accordance with the stages are prepared has been described, but one kind or three or more kinds of mouthpieces can be used depending on the contents of an orthodontic treatment.

In the above explanation, the method for applying wave stimulation from the outside of the mouth has been shown, but direct irradiation to a gingiva may be conducted by a probe in an oral cavity, for example.

In the above explanation, the orthodontic wire members provided with the loop at their intermediate portions serving as the adjusting means among respective teeth segments have been used, but other adjusting means which do not have such a constitution may be employed. In brief, adjusting means other than the orthodontic wire member may be used as long as it is formed from material which is safe even though it is put in an oral cavity and which allows adjustment among respective segments satisfactorily. For example, application of an orthodontic expansion screw or the like is available.

In the above explanation, the case that segments of the orthodontic mouthpieces have been designed to match with the dentitions of the anterior teeth and the buccal teeth one by one has been shown, but it is also possible to design two segments to match with the anterior teeth according to the situation.

In the above explanation, the case that two kinds of orthodontic mouthpieces of the first stage orthodontic mouthpiece A1 and the second stage orthodontic mouthpiece A2 are used has been described, but the treatment may be conducted by properly using three or more orthodontic mouthpieces sequentially.

In the above explanation, the high elastic silicone rubber has been used for the segment, but the segment can be formed from a material other than the silicone rubber as long as it has the following characteristics that a contact stimulation to the alveolar mucosa of an oral cavity is soft and a surface thereof is smooth. For example, various elastic materials for mouth guard used in sports can be used to form the segments. The material for the segment should not be particularly specified.

In the above explanation, the case that the ultrasonic wave stimulating device has been used as the wave stimulation supplying device which applies wave energy for contributing to the orthodontic tooth movement has been described, but another device which applies wave energy other than the ultrasonic wave can, of course, be used.

Furthermore, in addition to the orthodontic treatment, the orthodontic mouthpiece of the present invention can be applied as a fixing appliance for a jaw surgical operation or in the case of the jaw bone fracture. The orthodontic appliance of the present invention using such an orthodontic mouthpiece can also be applied to the treatment using the ultrasonic stimulation for promoting a treatment for a jaw surgical operation or a jaw bone fracture.

### INDUSTRIAL APPLICABILITY

Effects obtained by typical ones of the inventions disclosed by the present application will briefly be explained as follows:

According to the present invention, as compared with the case of using the conventional orthodontic appliance such as the MB appliance or the like, it is unnecessary to always place the orthodontic appliance and an effect of tooth movement in an orthodontic treatment is high. For this reason, mental and physical burdens on a patient in daily life during an orthodontic treatment can largely be reduced.

According to the present invention, by using a mouthpiece molded so as to match with a predicted set-up model, formation of an ideal dentition can easily be made as compared with the conventional art.

According to the present invention, since a synergistic effect with the activation based on blood flow increase in orthodontic portions and a live tissue adjacent thereto can be expected by utilizing the intermittent wave energy application instead of a conventional continuous load, the tooth movement can-be achieved by a considerably small load as compared with the conventional orthodontic appliance.

According to the present invention, since a load applied to a dentition is remarkably small as compared with that in the case of the conventional orthodontic appliance, a physical burden such as pain in a portion around the dentition, an injury in an oral cavity or the like due to the treatment can be reduced and a side effect such as a root resorption can also be reduced.

## Claims

1. A mouthpiece for orthodontics which is bitten by upper and lower teeth, the orthodontic mouthpiece comprising:
a plurality of orthodontic segments provided with an orthodontic guide portion which corresponds to respective ones of a plurality of partitioned regions of a dentition portion and guides a tooth to be corrected of the dentition portion to a side of the mouthpiece to which the dentition portion abuts; and
distance adjusting means for adjusting a distance between the segments.

2. An orthodontic mouthpiece according to claim 1,
wherein the orthodontic mouthpiece comprises a first stage orthodontic mouthpiece used for a stage from a start of an orthodontic treatment to a termination of a leveling of dentition; and a second stage orthodontic mouthpiece used for a stage from the termination of the leveling of dentition to a treatment termination.

3. An orthodontic mouthpiece according to claim 2,
wherein, in the first stage orthodontic mouthpiece, the orthodontic guide portion is formed in a shape of a groove in which the dentition corrected at the stage of the termination of leveling is accommodated.

4. An orthodontic mouthpiece according to claim 2,
wherein, in the second stage orthodontic mouthpiece, the orthodontic guide portion is formed in a shape in which the orthodontic guide portion comes in contact with tooth crowns constituting the dentition corrected at the stage of the treatment termination.

5. An orthodontic mouthpiece according to any one of claims 1 to 4,
wherein the segments include an upper anterior segment corresponding to an upper anterior teeth, a lower anterior segment corresponding to a lower anterior teeth, and left and right buccal segments corresponding to left and right upper and lower buccal teeth.

6. An orthodontic mouthpiece according to any one of claims 1 to 4,
wherein the segments include an upper anterior segment corresponding to upper anterior teeth, an upper left buccal segment corresponding to an upper left buccal teeth and an upper right buccal segment corresponding to upper right buccal teeth.

7. An orthodontic mouthpiece according to any one of claims 1 to 4,
wherein the segments include a lower anterior segment corresponding to a lower anterior teeth, a lower left buccal segment corresponding to a lower left buccal teeth, and a lower right buccal segment corresponding to a lower right buccal teeth.

8. An orthodontic mouthpiece according to any one of claims 1 to 7,
wherein the distance adjusting means is an orthodontic wire member which is provided at an intermediate portion with an extendable/retractable loop and whose end portions are respectively connected to segments to be adjusted.

9. An orthodontic appliance which promotes tooth movement to be subjected to orthodontics in an orthodontics comprising:
an orthodontic mouthpiece according to any one of claims 1 to 8; and
wave stimulation supplying means for applying wave energy which contributes to tooth movement to be subjected to the orthodontics to a surrounding tissue around a placement portion of the orthodontic mouthpiece.

10. An orthodontic appliance according to claim 9,
wherein the wave stimulation supplying means is ultrasonic generating means.
